(19) Europäisches Patentamt / European Patent Office / Office européen des brevets

(11) **EP 3 142 226 B1**

(12) **FASCICULE DE BREVET EUROPEEN**

(45) Date de publication et mention
de la délivrance du brevet:
**31.08.2022 Bulletin 2022/35**

(21) Numéro de dépôt: **16182095.6**

(22) Date de dépôt: **29.07.2016**

(51) Classification Internationale des Brevets (IPC):
**H02K 1/24** *(2006.01)*  **H02K 15/02** *(2006.01)*
**H02K 1/28** *(2006.01)*

(52) Classification Coopérative des Brevets (CPC):
**F16D 1/072; H02K 1/243; H02K 1/28; H02K 15/022**

(54) **MACHINE ELECTRIQUE TOURNANTE COMPORTANT UN ARBRE A DIAMETRES ETAGES ET PROCEDE D'ASSEMBLAGE D'UNE TELLE MACHINE**

ELEKTRISCHE ROTIERENDE MASCHINE, DIE EINE WELLE MIT ABGESTUFTEN DURCHMESSERN UMFASST, UND VERFAHREN ZUM ZUSAMMENBAU DIESER MASCHINE

ROTATING ELECTRICAL MACHINE COMPRISING A STEPPED-DIAMETER SHAFT AND METHOD FOR ASSEMBLING SUCH A MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.09.2015 FR 1558155**

(43) Date de publication de la demande:
**15.03.2017 Bulletin 2017/11**

(73) Titulaire: **VALEO EQUIPEMENTS ELECTRIQUES MOTEUR**
**94046 Créteil Cedex (FR)**

(72) Inventeurs:
• **BILTERYST, Pierre-Yves**
  **62170 Brimeux (FR)**
• **DELIANNE, Henri**
  **62630 Maresville (FR)**
• **MARGUERITTE, David**
  **62170 Wailly Beaucamp (FR)**
• **BALTHAZE, Patrice**
  **92310 Sevres (FR)**
• **JOZEFOWIEZ, Eric**
  **62770 Le Parcq (FR)**
• **MOURET, Franck**
  **62170 Ecuires (FR)**
• **PERREAUT, Sylvain**
  **62162 Vieille-Eglise (FR)**
• **DEBRUYNE, Hubert**
  **62780 Trepied (FR)**

(74) Mandataire: **Valeo Powertrain Systems**
**Service Propriété Intellectuelle**
**Immeuble le Delta**
**14, avenue des Béguines**
**95892 Cergy Pontoise (FR)**

(56) Documents cités:
**WO-A1-2006/103361      DE-A1- 19 543 541**

**Description**

DOMAINE TECHNIQUE DE L'INVENTION

La présente invention vise une machine électrique tournante et plus particulièrement un arbre et un rotor à griffe comportant deux demi-noyaux polaires. La présente invention vise également un procédé de pose d'un tel arbre.

La présente invention trouve une application particulièrement avantageuse dans les arbres assemblés sur des roues polaires à aimants forgés.

ETAT DE LA TECHNIQUE

De nombreuses machines électriques tournantes sont équipées d'un rotor à griffes. On décrit ci-après une telle machine sous la forme d'un alternateur compact et polyphasé, notamment pour véhicule automobile. Cet alternateur transforme de l'énergie mécanique en énergie électrique et peut être réversible. Un tel alternateur réversible est appelé alterno-démarreur et dans un autre mode de fonctionnement transforme de l'énergie électrique en énergie mécanique notamment pour démarrer le moteur thermique du véhicule.

Cette machine comporte essentiellement un carter et, à l'intérieur de celui-ci, un rotor à griffes, solidaire en rotation d'un arbre, et un stator, qui entoure le rotor avec présence d'un faible entrefer et qui comporte un corps en forme d'un paquet de tôles doté d'encoches équipées d'isolant d'encoches pour le montage des phases du stator, comportant chacune au moins un enroulement formant de part et d'autre du corps du stator un chignon.

Les enroulements sont obtenus par exemple à partir d'un fil continu recouvert d'émail ou à partir d'éléments conducteurs en forme de barre, tels que des épingles reliées entre elles par exemple par soudage. Ces enroulements sont par exemple des enroulements triphasés connectés en étoile ou en triangle, dont les sorties sont reliées à au moins un pont redresseur comportant des éléments redresseurs tels que des diodes ou des transistors du type MOSFET, notamment lorsqu'il s'agit d'un alterno-démarreur comme décrit par exemple dans le document FR A2745445.

Le rotor à griffes comporte deux roues polaires axialement juxtaposées et de forme annulaire présentant chacune un flasque transversal pourvu à sa périphérie externe de dents de forme trapézoïdale dirigées axialement vers le flasque de l'autre roue polaire, la dent d'une roue polaire pénétrant dans l'espace existant entre deux dents adjacentes de l'autre roue polaire, de sorte que les dents des roues polaires soient imbriquées.

Les flasques des roues sont de forme annulaire et présentent à leur périphérie externe des saillies radiales raccordées par des chanfreins comportant des dents. Ces saillies forment des griffes avec les dents. Le nombre de dents dépend des applications et notamment du nombre de phases du stator.

Un noyau cylindrique est intercalé axialement entre les flasques des roues. Ce noyau porte à sa périphérie externe un bobinage d'excitation. Un isolant, tel qu'une bobine de support du bobinage, est intercalé radialement entre le noyau et le bobinage. L'arbre du rotor porte à son extrémité avant un organe d'entraînement, tel qu'une poulie appartenant à un dispositif de transmission de mouvements à au moins une courroie entre l'alternateur et le moteur thermique du véhicule automobile, et à son extrémité arrière, de diamètre réduit, des bagues collectrices reliées par des liaisons filaires aux extrémités du bobinage d'excitation du rotor.

Des balais appartiennent à un porte-balais et sont disposés de façon à frotter sur les bagues collectrices. Le porte-balais est relié à un régulateur de tension. Lorsque le bobinage d'excitation est alimenté électriquement à partir des balais, le rotor, en matériau ferromagnétique, est magnétisé et devient un rotor inducteur avec formation de pôles magnétiques au niveau des dents des roues polaires.

Ce rotor inducteur crée un courant induit alternatif dans le stator induit lorsque l'arbre tourne, le ou les ponts redresseurs permettant de transformer le courant alternatif induit en un courant continu, notamment pour alimenter les charges et les consommateurs du réseau de bord du véhicule automobile, ainsi que pour recharger la batterie dudit véhicule.

Les performances, à savoir la puissance et le rendement, de la machine électrique tournante peuvent encore être augmentées en utilisant un certain nombre d'aimants permanents, par exemple douze ou seize aimants, disposés de manière symétrique par rapport à l'axe du rotor et interposés entre deux dents adjacentes à la périphérie interne du stator.

Les aimants permanents peuvent être insérés aux roues polaires par sertissage ou en forge. Le sertissage a l'inconvénient d'être une opération longue qui allonge l'assemblage de l'arbre sur le rotor, en effet le temps de cycle du sertissage est important et il peut constituer un goulot d'étranglement de la ligne de production. L'insertion en forge quant à elle accélère les opérations d'assemblage mais nécessite un centrage précis de l'arbre.

Il est connu de l'art antérieur d'utiliser un arbre comportant des gorges pour un arrêt axial et un moletage droit pour un arrêt en rotation comme décrit dans le document FR2905806. Ce type d'arbre présente l'inconvénient de ne pas assurer un centrage des roues polaires par rapport à l'arbre qui soit compatible avec des roues polaires avec aimants forgés.

Il est connu de l'art antérieur d'utiliser des arbres comportant une zone de centrage, mais pas de moletage dédié à la tenue en rotation des roues polaires ni d'appui ou collerette. Ces systèmes présentent l'inconvénient de ne pas garantir une tenue axiale satisfaisante des roues polaires.

WO 2006/103361 A1 et DE 195 43 541 A1 illustrent également l'art antérieur.

Aucun des systèmes actuels ne permet de répondre simultanément à tous les besoins requis, à savoir de permettre l'utilisation des roues polaires avec slots forgées, qui nécessite un centrage précis et une tenue axiale des roues polaires, combiné à une application serrage renforcé permettant une tenue radiale des roues polaires.

OBJET DE L'INVENTION

La présente invention vise à remédier à tout ou partie de ces inconvénients.

A cet effet, selon un premier aspect, la présente invention vise une machine électrique tournante selon la revendication 1.

Grâces à ces dispositions, l'arbre présente des zones dédiées au centrage, des zones dédiées au blocage en radial et une collerette permettant un blocage axial des roues polaires par rapport à l'arbre. En d'autres termes le premier tronçon de diamètre D1 permet une fonction de serrage sur une première roue polaire et d'arrêt en rotation, le deuxième tronçon de diamètre D2 permet une fonction de centrage sur au moins une roue polaire, le troisième tronçon de diamètre D3 permet une fonction de serrage sur une deuxième roue polaire et le quatrième tronçon de diamètre D4 permet une fonction de stop axial.

De plus, les tronçons successifs de diamètre dégressif permettent de générer moins de contraintes et déformations lors du montage par rapport aux systèmes de l'art antérieur.

Ces dispositions permettent en particulier un centrage compatible avec l'utilisation de roues polaires avec aimants en slots forgés.

En effet, on déploie aujourd'hui des rotors dans lesquels les aimants sont intégrés en forge. Afin d'utiliser de tels rotors, il est impératif que le diamètre dans lequel est inscrit les roues polaires soit parfaitement coaxial avec l'arbre. Sans la partie de centrage, il serait compliqué d'aligner le rotor et cela provoquerait un maintien aimant non conforme et une mauvaise tenue en couple.

L'utilisation de l'arbre objet de l'invention permettra d'utiliser des roues polaires avec slot forgés et donc de retirer l'opération de sertissage et ainsi avoir un procédé d'assemblage plus simple, plus rapide et moins coûteux.

Ces dispositions permettent également un serrage renforcé du rotor grâce à la collerette présente sur le quatrième tronçon. Lors de l'opération d'assemblage, les roues polaires arrière et avant en particulier mais aussi les autres éléments du rotor comme la poulie, la bague intérieure du roulement et le jonc sont insérés en force avec déformation locale de matière. La collerette permet d'appliquer une force de serrage plus importante et ainsi d'obtenir une tension dans l'arbre plus importante.

Selon l'invention, la roue polaire avant comporte :

- une zone de serrage complémentaire d'au moins une partie du premier tronçon et
- une zone de centrage complémentaire d'au moins une partie du deuxième tronçon, et la roue polaire arrière comporte :
- une zone de centrage complémentaire d'au moins une partie du deuxième tronçon et
- une zone de serrage complémentaire d'au moins une partie du troisième tronçon.

Grâces à ces dispositions, au moins une dimension de chaque tronçon, en particulier la longueur ou le diamètre, se retrouve sur une zone d'au moins une roue polaire. Ces dispositions facilitent l'assemblage de l'arbre et des roues polaires.

Dans des modes de réalisation, la zone de centrage de la roue polaire arrière et la zone de centrage de la roue polaire avant sont de longueurs différentes.

Grâces à ces dispositions, le procédé d'assemblage de l'arbre dans les roues polaires est facilité. En effet, lors de l'emmanchement de l'arbre, ces dispositions permettent de faire rentrer les moletages de l'arbre dans la matière des roues polaires après avoir centré les roues par la partie lisse de l'arbre. Ces dispositions sont particulièrement avantageuses si au moins l'un des deux moletages est de grande longueur.

Dans des modes de réalisation, la longueur de la roue polaire arrière est inférieure à la somme des longueurs des zones de centrage des roues polaires arrière et avant.

Dans des modes de réalisation, seulement une partie du moletage du premier tronçon est recouverte par la roue polaire avant.

Grâces à ces dispositions, le moletage du premier tronçon est en partie visible après assemblage des roues polaires avec l'arbre. Sur ce moletage en partie visible, on peut fixer un jonc par emmanchement en force. Ces dispositions permettent au moletage du premier tronçon de bloquer en rotation la roue polaire avant et le jonc. Le jonc est une bague insérée sur lequel viendra s'appuyer le roulement.

Dans des modes de réalisation, la machine électrique tournante objet de l'invention comporte au moins un moletage dit pointe à pointe dans lequel la base des protubérances successives formant le moletage sont en contact les unes avec les autres.

Grâces à ces dispositions, le procédé d'assemblage de l'arbre dans les roues polaires est plus facile à réaliser, en effet ce type de moletage nécessite d'appliquer un effort moins important lors du montage.

Dans des modes de réalisation, la machine électrique tournante objet de l'invention comporte au moins un moletage dit à pointes écartées dans lequel les bases de deux protubérances successives formant le moletage sont séparées entre elles par une surface sensiblement plane.

Grâces à ces disposions, la surface plane entre deux dents successives permet de réaliser un centrage plus précis des roue polaire lors de l'emmanchement dans les roues polaires.

Selon un deuxième aspect, la présente invention vise un procédé d'assemblage d'une machine électrique tournante objet de l'invention qui comporte les étapes suivantes :

- emmanchement de l'arbre sur les roues polaires avant et arrière,
- indexation des zones de centrage des roues polaires avant et arrière sur le deuxième tronçon de l'arbre,
- serrage de la zone de serrage de la roue polaire arrière sur le troisième tronçon de l'arbre et
- serrage de la zone de serrage de la roue polaire avant sur le premier tronçon de l'arbre et
- mise en butée de la roue polaire arrière sur la collerette du quatrième tronçon.

Les buts, avantages et caractéristiques particulières de ce procédé objet de la présente invention étant similaires à ceux de la machine électrique tournante objet de la présente invention, ils ne sont pas rappelés ici.

BREVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :

- la figure 1 représente, schématiquement et en coupe, un mode de réalisation particulier de l'arbre de la machine électrique tournante objet de l'invention,
- la figure 2 représente, schématiquement, en vue perspective et en coupe, un mode de réalisation des deux roues polaires de la machine électrique tournante objet de l'invention,
- la figure 3 représente, schématiquement, en vue perspective et en coupe, un mode de réalisation particulier de l'arbre et des roues polaire de la machine électrique tournante objet de l'invention,
- la figure 4 représente, schématiquement, en vue perspective et en coupe, un mode de réalisation particulier de l'arbre et des roues polaires de la machine électrique tournante objet de l'invention,
- la figure 5 représente, schématiquement, en vue de coupe, un mode de réalisation dit point à pointe d'au moins un moletage de l'arbre de la machine électrique tournante objet de l'invention,
- la figure 6 représente, schématiquement, en vue de coupe, un mode de réalisation dit pointes écartées d'au moins un moletage de l'arbre de la machine électrique tournante objet de l'invention et
- la figure 7 représente, sous forme de logigramme, un mode de réalisation particulier du procédé d'assemblage de la machine électrique tournante objet de l'invention.

DESCRIPTION DETAILLEE DE MODES DE REALISATION DE L'INVENTION

La présente description est donnée à titre non limitatif, chaque caractéristique d'un mode de réalisation pouvant être combinée à toute autre caractéristique de tout autre mode de réalisation de manière avantageuse.

On note, dès à présent, que les figures ne sont pas à l'échelle.

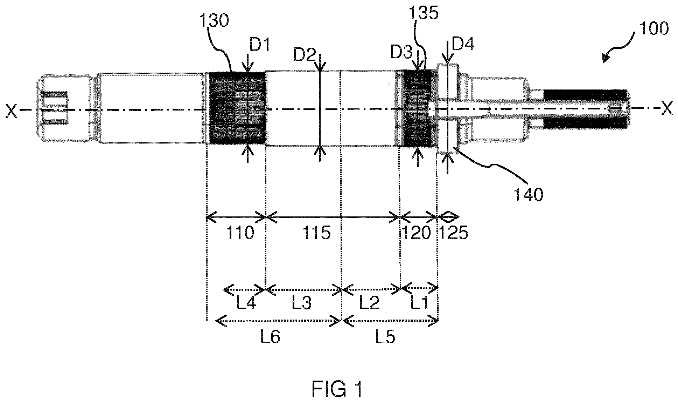

On observe, en figure 1, un mode de réalisation particulier de l'arbre 100 de la machine électrique tournante 10 objet de l'invention.

Selon l'invention la machine électrique tournante 10 comporte une roue polaire avant 230, une roue polaire arrière 205 et un arbre 100 comportant quatre tronçons 110, 115, 120, 125, de diamètres respectifs D1, D2, D3, D4, répartis axialement dans laquelle:

- le premier tronçon 110 comporte un moletage 130 configuré pour assurer une tenue radiale entre l'arbre 100 et la roue polaire avant 230,
- le deuxième tronçon 115 est configuré pour permettre l'indexation et le centrage des roues polaires avant et arrière, le deuxième tronçon est une partie de section circulaire et de surface lisse,
- le troisième tronçon 120 comporte un moletage 135 configuré pour assurer une tenue radiale entre l'arbre 100 et la roue polaire arrière 205 et
- le quatrième tronçon 125 comporte une collerette 140 configurée pour assurer la tenue axiale entre l'arbre 100 et au moins une roue polaire 205, 230,

et dans laquelle les diamètres D1, D2, D3 et D4 de l'arbre 100 respectent la relation suivante :

$$D1 < D2 < D3 < D4.$$

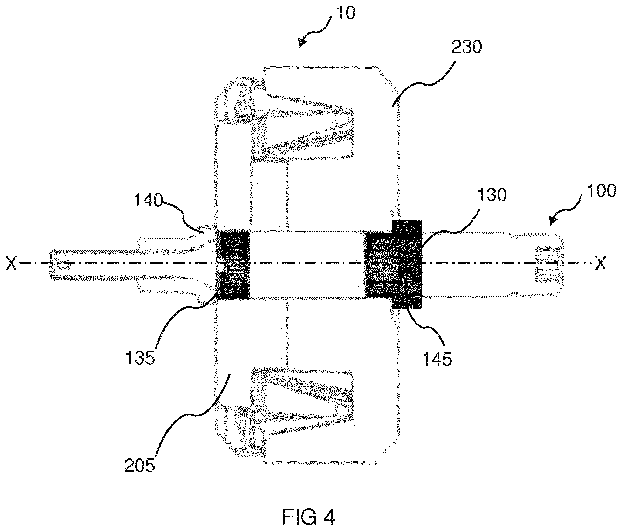

L'arbre 100 est une pièce allongée de section ronde configurée pour être assemblée avec les autres pièces du rotor comme, par exemple, la roue polaire avant 230 et arrière 205, la poulie (non représentée), une bague intérieure du roulement (non représenté) et un jonc représenté par la référence 145 sur la figure 4. L'arbre 100 constitue une pièce centrale du rotor solidaire en rotation avec les roues polaires avant et arrière. Dans des modes de réalisation, l'arbre 100 est assemblé avec les autres éléments du rotor par emmanchement en force.

Dans des modes de réalisation préférentiels l'ordre d'insertion par emmanchement en force de l'arbre 100 avec les autres pièces du rotor est le suivant : la bague intérieure du roulement est appuyée sur le jonc 145, le jonc est appuyé sur la roue polaire avant 230, la roue polaire avant est appuyée sur la roue polaire arrière 205 et la roue polaire arrière est appuyé sur la collerette 140 de l'arbre 100.

Dans des modes de réalisation préférentiels l'arbre 100 et les roues polaires avant et arrière sont des pièces en acier. Préférentiellement, l'arbre 100 est une pièce comportant un acier plus dur que l'acier des roues polaires avant 230 et arrière 205 afin de faciliter l'emmanchement de l'arbre 100. Préférentiellement, les roues polaires avant 230 et arrière 205 comportent un acier doux à basse teneur en carbone.

L'arbre 100 comporte un premier tronçon 110 comportant un moletage 130. Dans des modes de réalisation, le moletage 130 est un moletage dit pointe à pointe ou un moletage dit à pointes écartées. Le premier tronçon 110 est de diamètre plus petit que les tronçons 115, 120 et 125. Dans des modes de réalisation préférentiels, au moins une dimension du premier tronçon 110 correspond à au moins une dimension de la roue polaire avant 230. Le premier tronçon 110 est configuré pour être emmanché en force dans une roue polaire. Une fois assemblé, le premier tronçon permet la tenue en rotation de la roue polaire avant 230 par rapport à l'arbre 100.

L'arbre 100 comporte un deuxième tronçon 115 configuré pour permettre l'indexation et le centrage des roues polaires avant et arrière. Selon l'invention, le deuxième tronçon 115 est une partie de section circulaire et de surface lisse. Dans des modes de réalisation préférentiels, au moins une dimension du deuxième tronçon 115 est complémentaire avec au moins une dimension d'au moins une des roues polaires, 205, 230. Dans des modes de réalisation, la longueur du deuxième tronçon 115 est égale à la somme des longueurs des zones de guidage 215 et 220 respectivement des roues polaires avant et arrière. Le deuxième tronçon 115 est de diamètre plus petit que les tronçons 120 et 125.

Dans des modes de réalisation, le deuxième tronçon 115 a un diamètre D2 uniforme sur toute sa longueur.

Dans des modes de réalisation non représentés, le deuxième tronçon 115 comporte deux parties longues de diamètre D2 séparées par une partie courte de diamètre supérieur à D2. Dans des modes de réalisation, la partie courte est de diamètre supérieur de 0,01mm (abréviation de millimètre) à D1.

Dans des modes de réalisation non représentés, le deuxième tronçon 115 comporte deux parties distinctes ; une première partie de diamètre D2 complémentaire d'une des deux roues polaires et une deuxième partie de diamètre D2' complémentaire de l'autre roue polaire. Dans ce mode de réalisation les diamètres des D1, D2, D2', D3 et D4 de l'arbre 100 respectent la relation suivante :

$$D1 < D2 < D2' < D3 < D4.$$

L'arbre 100 comporte un troisième tronçon 120 comportant un moletage 135. Dans des modes de réalisation, le moletage 135 est un moletage dit pointe à pointe ou un moletage dit à pointes écartées. Le troisième tronçon 120 est de diamètre plus petit que le tronçon 125. Dans des modes de réalisation préférentiels, au moins une dimension du troisième tronçon 120 correspond à au moins une dimension de la roue polaire arrière 205. Le troisième tronçon 120 est configuré pour être emmanché en force dans une roue polaire. Une fois assemblé, le troisième tronçon permet la tenue en rotation de la roue polaire arrière 205 par rapport à l'arbre 100.

L'arbre 100 comporte un quatrième tronçon 125 qui comporte une collerette 140 configurée pour assurer la tenue axiale entre l'arbre 100 et au moins une roue polaire 205, 230. La collerette 140 est une augmentation brusque du diamètre de l'arbre 100 qui constitue un épaulement configuré pour bloquer au moins une pièce emmanchée en force sur l'arbre 100.

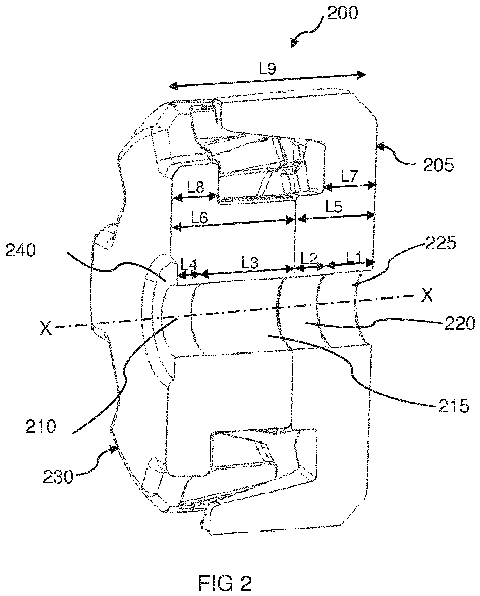

On observe en figure 2, un mode de réalisation des deux roues polaires, 205 et 230, de la machine électrique tournante 10 objet de l'invention. La machine électrique comporte en plus des éléments illustrés sur la figure 2, un stator entourant les deux roues polaires montées sur l'arbre 100. Par exemple, la machine électrique tournante comporte en outre le jonc 145, le roulement et la poulie. La machine comporte également un carter supportant ledit stator et ledit roulement.

Selon l'invention la roue polaire avant 230 comporte :

- une zone de serrage 210 complémentaire d'au moins une partie du premier tronçon 110 et
- une zone de centrage 215 complémentaire d'au moins une partie du deuxième tronçon 115,

et la roue polaire arrière 205 comporte :

- une zone de centrage 220 complémentaire d'au moins une partie du deuxième tronçon 115 et
- une zone de serrage 225 complémentaire d'au moins une partie du troisième tronçon 120.

La machine électrique tournante 10 comporte deux roues polaires, 205 et 230, axialement juxtaposées et de forme annulaire présentant chacune un flasque transversal pourvu à sa périphérie externe de dents de forme trapézoïdale dirigées axialement vers le flasque de l'autre roue polaire, la dent d'une roue polaire pénétrant dans l'espace existant entre deux dents adjacentes de l'autre roue polaire, de sorte que les dents des roues polaires soient imbriquées.

En son centre, l'assemblage des deux roues polaires, aussi appelé paquet 200, comporte une cavité tubulaire traversant le paquet de part selon un axe X-X et configurée pour abriter l'arbre 100.

La roue polaire avant 230 comporte une zone de serrage 210 complémentaire d'au moins une partie du premier tronçon 110. Préférentiellement, la zone de serrage 210 et le premier tronçon 110 sont de longueurs et de diamètres sensiblement égaux. On définit la longueur L4 comme la longueur de la zone de serrage 210 selon l'axe X-X.

Selon des modes de réalisation, la longueur L4 est inférieure à la longueur axiale du moletage 130.

La roue polaire avant 230 comporte une zone de centrage 215 complémentaire d'au moins une partie du deuxième tronçon 115. Préférentiellement, la zone de centrage 215 et le deuxième tronçon 115 de diamètres sensiblement égaux. On définit la longueur L3 comme la longueur de la zone de centrage 215 selon l'axe X-X. Dans des modes de réalisation préférentiels, la longueur L3 est strictement supérieure à cinq millimètres.

On définit L6 comme la longueur de la roue polaire avant 230.

Selon des modes de réalisation, la longueur L6 est égale à la somme des longueurs L4 et L3.

De manière alternative, la longueur L6 est légèrement supérieure à la somme des longueurs L4 et L3. Cela est dû à un décrochement 240 visible sur la figure 2.

Dans des modes de réalisation préférentiels, la longueur L4 est comprise entre cinq pourcents et quatre-vingt quinze pourcents de la longueur de L6.

La roue polaire arrière 205 comporte une zone de centrage 220 complémentaire d'au moins une partie du deuxième tronçon 115. Préférentiellement, la zone de centrage 220 et le deuxième tronçon 115 sont de diamètres sensiblement égaux. On définit la longueur L2 comme la longueur de la zone de centrage 220 selon l'axe X-X. Dans des modes de réalisation préférentiels, la longueur L2 est strictement supérieure à cinq millimètres.

Préférentiellement, la longueur du deuxième tronçon 115 est égale à la somme des longueurs, L1 et L2, de zones de centrage 215 et 220.

La roue polaire arrière 205 comporte une zone de serrage 225 complémentaire d'au moins une partie du troisième tronçon 120. Préférentiellement, la zone de serrage 225 et le troisième tronçon 120 sont de longueurs et de diamètres sensiblement égaux. On définit la longueur L1 comme la longueur de la zone de serrage 225 selon l'axe X-X.

On définit L5 comme la longueur de la roue polaire arrière 205.

Dans des modes de réalisation, la longueur L5 est égale à la sommes des longueurs L2 et L1.

De manière alternative, la longueur L5 peut être légèrement supérieure à la somme des longueurs L2 et L1. C'est notamment le cas lorsque la roue polaire arrière présente un décrochement.

Dans des modes de réalisation préférentiels, la longueur L1 est comprise entre cinq pourcents et quatre-vingt quinze pourcents de la longueur de L5.

Dans des modes de réalisation, la zone de centrage 220 de la roue polaire arrière 205 et la zone de centrage 215 de la roue polaire avant 230 sont de longueurs différentes. En d'autres termes, les roues polaires avant 230 et arrière 205 sont dissymétriques.

Dans des modes de réalisation, la longueur de la roue polaire arrière 205 est au moins inférieure à la somme des longueurs des zones de centrage des roues polaires arrière et avant 220 et 215.

En d'autres termes les dimensions du paquet 200 respectent la relation suivante :

$$L5 < L2+L3.$$

Ce mode de réalisation est particulièrement avantageux dans le cas où les roues polaires avant 230 et arrière 205 sont dissymétriques et permet d'obtenir une longueur axiale des deux roues polaires L5+L6 minimale.

En effet, le choix de la longueur axiale de L6 est plus contraint. Il est plus simple d'ajuster la longueur L5. C'est notamment le cas parce que D2 est d'abord emmanché dans la partie de longueur axiale L5. Tandis que la longueur L6 doit être telle que L3 soit supérieure à L4 sinon pendant l'introduction dans la roue polaire avant, on commence à toucher le moletage 130 sans avoir touché la partie 115 avec la partie de longueur L3.

On définit L7 comme la dimension de la base du flasque de la roue polaire arrière 205.

Dans des modes de réalisation, la dimension L7 est égale à L5, la longueur de la roue polaire arrière 205, de sorte que la base du flasque occupe toute la dimension de la roue polaire. Ces modes de réalisation correspondent notamment au cas où la longueur du noyau de la roue polaire arrière est sensiblement nulle. Dans ce cas, le noyau est réalisé dans son ensemble par la roue polaire avant. Dans ces modes de réalisation la longueur L2 de la zone de centrage 220 est préférentiellement plus grande que la longueur L1 de la zone de serrage 225.

On définit L8 comme la dimension de la base du flasque de la roue polaire avant 230.

Dans des modes de réalisation, la dimension L8 est égale à L6, la longueur de la roue polaire avant 230, de sorte que la base du flasque occupe toute la dimension de la roue polaire. Ces modes de réalisation correspondent notamment au cas où la longueur du noyau de la roue polaire avant est sensiblement nulle. Dans ce cas, le noyau est réalisé dans son ensemble par la roue polaire arrière. Dans ces modes de réalisation la longueur L3 de la zone de centrage 215 est préférentiellement plus grande que la longueur L4 de la zone de serrage 210.

Dans d'autres modes de réalisation les deux roues polaires, 205 et 230 sont symétriques. En d'autres termes les longueurs L6 et L5 sont égales, les longueurs des zones de serrages 210 et 225 sont égales et les longueurs des zones de centrage L2 et L3 sont égales.

On définit L9 comme la longueur axiale du paquet 200 composé des deux roues polaires. Elle est donc égale à la somme des longueurs L5+L6.

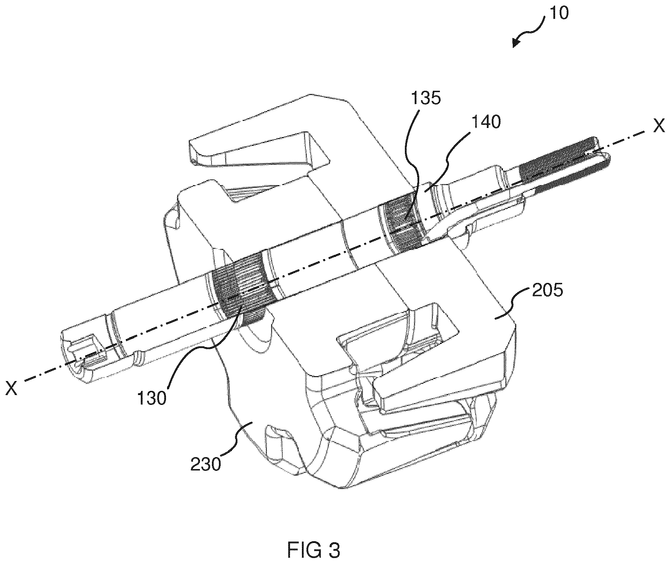

On observe en figure 3, un mode de réalisation particulier de l'arbre 100 et des roues polaires, 205 et 235, de la machine électrique tournante 10 objet de l'invention.

Dans des modes de réalisation, seulement une partie du moletage 130 du premier tronçon 110 est recouverte par la roue polaire avant 230. En d'autres termes, une partie du moletage 130 est encore visible après montage des roues polaires, 205 et 230, sur l'arbre 100. La partie du moletage 130 dépassante est configurée pour être enserrée par le jonc représenté par la référence 145 sur la figure 4.

Selon des modes de réalisation, le jonc 145 est en partie logé axialement dans le décrochement 240. Cela correspond à ce qui est illustré sur la figure 4.

On observe en figure 4, un mode de réalisation particulier de l'arbre et des roues polaires de la machine électrique tournante objet de l'invention.

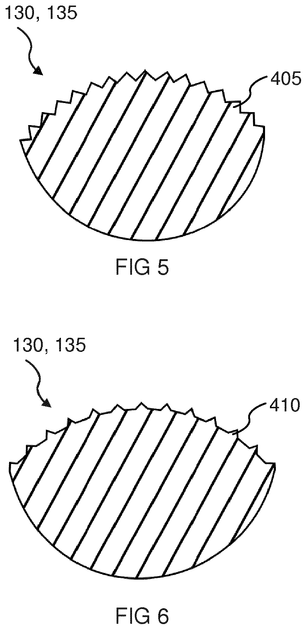

On observe en figures 5 et 6 deux modes de réalisation des moletages 130 et 135. Les moletages 130 et 135 comportent des stries réparties de manière uniforme sur l'ensemble de la surface occupée par le moletage.

Dans des modes de réalisation, au moins un moletage est droit. Un moletage droit comporte des stries parallèles entre elles et orientées selon l'axe X-X.

Dans des modes de réalisation, au moins un moletage est croisé. Un moletage croisé comporte deux séries de stries. Les stries d'une même série sont perpendiculaires entre elles. Les stries de la première série ont un angle non nul par rapport aux stries de la première série de sorte que les deux séries de stries forment un croisillon. Dans des modes de réalisation, l'angle entre les stries de la première série et les stries de la deuxième série est de quatre-vingt dix degrés.

Dans des modes de réalisation, le serrage des zones de serrage 210, 225 respectivement sur les moletages 130, 135 est configuré pour assurer une tenue au couple de la roue polaire arrière 205 ou avant 230 de 150 Newton-mètres.

Dans des modes de réalisation la pénétration d'un moletage 130, 135 dans la matière d'une zone de serrage, 225 ou 210, est comprise entre 0,1mm et 0,6mm. Ces valeurs de pénétration sont ajustées en fonction des longueurs des moletages de sorte que le moletage soit configuré pour assurer une tenue en couple prédéterminée. Afin d'assurer une tenue en couple équivalente une pénétration plus importante sera nécessaire pour une longueur de moletage, 130 ou 135, plus petite.

Dans des modes de réalisation préférentiels, la pénétration d'au moins un moletage 130, 135 dans la matière de la zone de serrage 210, 225 est de 0,4 mm.

Dans des modes de réalisation, le serrage des zones de serrage 210, 225 respectivement sur les moletages 130, 135 est configuré pour assurer une tenue au couple de la roue polaire arrière 205 de 150 Newton-mètres. Dans des modes de réalisation, la pénétration du moletage 130, 135 est de 0,4 mm. Dans des modes de réalisation, la pénétration du moletage 130, 135 est de 0,29 mm.

On observe en figure 5 une partie d'un moletage dit pointe à pointe qui comporte une pluralité de protubérances formant des stries Chaque strie est de forme triangulaire et la base de chaque strie est en contact avec la base des deux stries les plus proches. Dans des modes de réalisation, la pointe formée par le sommet saillant d'une strie a un angle de 90 degrés.

Dans des modes de réalisation, la machine électrique tournante 10 objet de l'invention qui comporte au moins un moletage 130, 135 dit pointe à pointe dans lequel la base des protubérances 405 successives formant le moletage sont en contact les unes avec les autres.

On observe en figure 6 une partie d'un moletage dit à pointes écartées qui comporte une pluralité de protubérance formant des stries. Chaque strie est de forme triangulaire et la base de chaque strie est séparée de la base des deux stries les plus proches par une surface sensiblement plane. Dans des modes de réalisation, la pointe formée par le sommet saillant d'une strie a un angle de 90 degrés.

Dans des modes de réalisation, la machine électrique tournante 10 objet de l'invention comporte au moins un moletage 110, 120 dit à pointes écartées dans lequel la base de deux protubérances 410 successives formant le moletage sont séparées entre elles par une surface sensiblement plane.

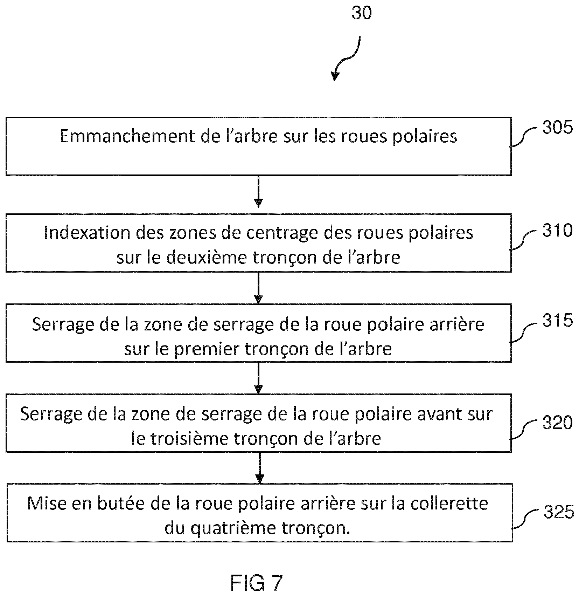

On observe en figure 7, un procédé d'assemblage 30 d'une machine électrique tournante 10 objet de l'invention qui comporte les étapes suivantes :

- emmanchement 305 de l'arbre 100 sur les roues polaires avant et arrière,
- indexation 310 des zones de centrage des roues polaire avant et arrière sur le deuxième tronçon de l'arbre,
- serrage 315 de la zone de serrage de la roue polaire arrière sur le troisième tronçon de l'arbre,
- serrage 320 de la zone de serrage de la roue polaire avant sur le premier tronçon de l'arbre et
- mise en butée 335 de la roue polaire arrière sur la collerette du quatrième tronçon.

Par exemple, l'emmanchement 305 de l'arbre est fait en force.

## Revendications

1. Machine électrique tournante (10) comportant une roue polaire avant (230), une roue polaire arrière (205) et un arbre (100) comportant quatre tronçons (110, 115, 120, 125), de diamètres respectifs (D1, D2, D3, D4), répartis axialement ,la machine étant configurée à ce que:

    - le premier tronçon (110) comporte un moletage

(130) configuré pour assurer une tenue radiale entre l'arbre (100) et la roue polaire avant (230),
- le deuxième tronçon (115) est configuré pour permettre l'indexation et le centrage des roues polaires avant et arrière (230, 205), le deuxième tronçon est une partie de section circulaire et de surface lisse,
- le troisième tronçon (120) comporte un moletage (135) configuré pour assurer une tenue radiale entre l'arbre (100) et la roue polaire arrière (205) et
- le quatrième tronçon (125) comporte une collerette (140) configurée pour assurer la tenue axiale entre l'arbre (100) et au moins une roue polaire (205, 230), à ce que les diamètres (D1, D2, D3, D4) de l'arbre (100) respectent la relation suivante :

$$D1 < D2 < D3 < 2 \; D4, \P$$

et à ce que la roue polaire avant (230) comporte :

- une zone de serrage (210) complémentaire d'au moins une partie du premier tronçon (110) et
- une zone de centrage (215) complémentaire d'au moins une partie du deuxième tronçon (115),

et la roue polaire arrière (205) comporte :

- une zone de centrage (220) complémentaire d'au moins une partie du deuxième tronçon (115) et
- une zone de serrage (225) complémentaire d'au moins une partie du troisième tronçon (120).

2. Machine électrique tournante (10), selon la revendication 1, dans laquelle la zone de centrage (220) de la roue polaire arrière (205) et la zone de centrage (215) de la roue polaire avant (230) sont de longueurs différentes.

3. Machine électrique tournante (10), selon la revendication 2, dans laquelle, chaque roue polaire (205, 230) comporte un flasque transversal pourvu à sa périphérie externe de dents de forme trapézoïdale dirigées axialement vers le flasque de l'autre roue polaire (205, 230), et dans laquelle la longueur de la roue polaire arrière (L5) est inférieure à la somme des longueurs (L2 et L3) des zones de centrage des roues polaires arrière et avant (220 et 215).

4. Machine électrique tournante (10), selon l'une quelconques des revendications précédentes , dans laquelle seulement une partie du moletage (130) du premier tronçon (110) est recouverte par la roue polaire avant (230).

5. Machine électrique tournante (10), selon l'une des revendications 1 à 4, qui comporte au moins un moletage (130, 135) dit pointe à pointe dans lequel la base des protubérances (405) successives formant le moletage sont en contact les unes avec les autres.

6. Machine électrique tournante (10), selon l'une des revendication 1 à 5, qui comporte au moins un moletage (130, 135) dit à pointes écartées dans lequel la base de deux protubérances (410) successives formant le moletage sont séparées entre elles par une surface sensiblement plane.

7. Procédé d'assemblage (30) d'une machine électrique tournante (10) selon l'une des revendications 1 à 6, **caractérisé en ce qu'**il comporte les étapes suivantes :

- emmanchement (305) de l'arbre (100) sur les roues polaires avant (230) et arrière (205),
- indexation (310) des zones de centrage des roues polaire avant et arrière sur le deuxième tronçon de l'arbre,
- serrage (315) de la zone de serrage de la roue polaire arrière sur le troisième tronçon de l'arbre,
- serrage (320) de la zone de serrage de la roue polaire avant sur le premier tronçon de l'arbre et
- mise en butée (335) de la roue polaire arrière sur la collerette du quatrième tronçon.

**Patentansprüche**

1. Rotierende elektrische Maschine (10), welche ein vorderes Polrad (230), ein hinteres Polrad (205) und eine Welle (100) aufweist, die vier Abschnitte (110, 115, 120, 125) mit jeweiligen Durchmessern (D1, D2, D3, D4) aufweist, die axial verteilt sind, wobei die Maschine derart ausgelegt ist, dass:

- der erste Abschnitt (110) eine Rändelung (130) aufweist, die dafür ausgelegt ist, einen radialen Halt zwischen der Welle (100) und dem vorderen Polrad (230) sicherzustellen,
- der zweite Abschnitt (115) dafür ausgelegt ist, die Indexierung und die Zentrierung des vorderen und des hinteren Polrades (230, 205) zu ermöglichen, wobei der zweite Abschnitt ein Teil mit kreisförmigem Querschnitt und glatter Oberfläche ist,
- der dritte Abschnitt (120) eine Rändelung (135) aufweist, die dafür ausgelegt ist, einen radialen Halt zwischen der Welle (100) und dem hinteren Polrad (205) sicherzustellen, und
- der vierte Abschnitt (125) einen Kragen (140) aufweist, der dafür ausgelegt ist, den axialen Halt zwischen der Welle (100) und wenigstens einem Polrad (205, 230) sicherzustellen,

dass die Durchmesser (D1, D2, D3, D4) der Welle der folgenden Beziehung genügen:

$$D1 < D2 < D3 < D4,$$

und dass das vordere Polrad (230) aufweist:

- einen Spannbereich (210), der zu wenigstens einem Teil des ersten Abschnitts (110) komplementär ist, und
- einen Zentrierbereich (215), der zu wenigstens einem Teil des zweiten Abschnitts (115) komplementär ist,

und das hintere Polrad (205) aufweist:

- einen Zentrierbereich (220), der zu wenigstens einem Teil des zweiten Abschnitts (115) komplementär ist, und
- einen Spannbereich (225), der zu wenigstens einem Teil des dritten Abschnitts (120) komplementär ist.

2. Rotierende elektrische Maschine (10) nach Anspruch 1, wobei der Zentrierbereich (220) des hinteren Polrades (205) und der Zentrierbereich (215) des vorderen Polrades (230) unterschiedliche Längen aufweisen.

3. Rotierende elektrische Maschine (10) nach Anspruch 2, wobei jedes Polrad (205, 230) einen quer angeordneten Lagerschild aufweist, der an seinem Außenumfang mit trapezförmigen Zähnen versehen ist, die axial zum Lagerschild des anderen Polrades (205, 230) hin gerichtet sind, und wobei die Länge des hinteren Polrades (L5) kleiner als die Summe der Längen (L2 und L3) der Zentrierbereiche des hinteren und des vorderen Polrades (220 und 215) ist.

4. Rotierende elektrische Maschine (10) nach einem der vorhergehenden Ansprüche, wobei nur ein Teil der Rändelung (130) des ersten Abschnitts (110) von dem vorderen Polrad (230) bedeckt wird.

5. Rotierende elektrische Maschine (10) nach einem der Ansprüche 1 bis 4, welche wenigstens eine sogenannte Rändelung (130, 135) "Spitze an Spitze" aufweist, bei welcher die Grundlinien der aufeinander folgenden Vorsprünge (405), welche die Rändelung bilden, sich in Kontakt miteinander befinden.

6. Rotierende elektrische Maschine (10) nach einem der Ansprüche 1 bis 5, welche wenigstens eine sogenannte Rändelung (130, 135) "mit beabstandeten Spitzen" aufweist, bei welcher die Grundlinien von zwei aufeinander folgenden Vorsprüngen (410), welche die Rändelung bilden, durch eine im Wesentlichen ebene Fläche voneinander getrennt sind.

7. Verfahren zum Zusammenbau (30) einer rotierenden elektrischen Maschine (10) nach einem der Ansprüche 1 bis 6, **dadurch gekennzeichnet, dass** es die folgenden Schritte umfasst:

- Eindrücken (305) der Welle (100) in das vordere (230) und das hintere (205) Polrad,
- Indexierung (310) der Zentrierbereiche des vorderen und des hinteren Polrades auf dem zweiten Abschnitt der Welle,
- Spannen (315) des Spannbereichs des hinteren Polrades auf dem dritten Abschnitt der Welle,
- Spannen (320) des Spannbereichs des vorderen Polrades auf dem ersten Abschnitt der Welle und
- Bringen des hinteren Polrades in Anlage (335) am Kragen des vierten Abschnitts.

## Claims

1. Rotating electric machine (10) comprising a front pole wheel (230), a rear pole wheel (205) and a shaft (100) comprising four axially distributed segments (110, 115, 120, 125) of respective diameters (D1, D2, D3, D4), the machine being configured such that:

- the first segment (110) comprises a knurled part (130) configured to ensure radial retention between the shaft (100) and the front pole wheel (230),
- the second segment (115) is configured to allow the indexing and the centring of the front and rear pole wheels (230, 205), the second segment being a part that has a circular cross section and a smooth surface,
- the third segment (120) comprises a knurled part (135) configured to ensure radial retention between the shaft (100) and the rear pole wheel (205) and
- the fourth segment (125) comprises a collar (140) configured to ensure axial retention between the shaft (100) and at least one pole wheel (205, 230),

such that the diameters (D1, D2, D3, D4) of the shaft (100) satisfy the following relationship:

$$D1 < D2 < D3 < D4,$$

and such that the front pole wheel (230) comprises:

- a clamping region (210) which is complementary to at least part of the first segment (110) and
- a centring region (215) which is complementary to at least part of the second segment (115),

and the rear pole wheel (205) comprises:

- a centring region (220) which is complementary to at least part of the second segment (115) and
- a clamping region (225) which is complementary to at least part of the third segment (120).

2. Rotating electric machine (10), according to Claim 1, wherein the centring region (220) of the rear pole wheel (205) and the centring region (215) of the front pole wheel (230) have different lengths.

3. Rotating electric machine (10), according to Claim 2, wherein each pole wheel (205, 230) comprises a transverse flange provided, on its outer periphery, with teeth of trapezoidal shape directed axially towards the flange of the other pole wheel (205, 230), and wherein the length of the rear pole wheel (L5) is shorter than the sum of the lengths (L2 and L3) of the centring regions (220 and 215) of the rear and front pole wheels.

4. Rotating electric machine (10), according to any one of the preceding claims, wherein only part of the knurled part (130) of the first segment (110) is covered by the front pole wheel (230).

5. Rotating electric machine (10), according to one of Claims 1 to 4, which comprises at least one "point-topoint" knurled part (130, 135), wherein the base of the successive protuberances (405) which form the knurled part are in contact with one another.

6. Rotating electric machine (10), according to one of Claims 1 to 5, which comprises at least one "spaced point" knurled part (130, 135), wherein the base of two successive protuberances (410) which form the knurled part are separated from one another by a substantially flat surface.

7. Method (30) for assembling a rotating electric machine (10) according to one of Claims 1 to 6, **characterized in that** the method comprises the following steps:

- fitting (305) the shaft (100) on the front (230) and rear (205) pole wheels,
- indexing (310) the centring regions of the front and rear pole wheels on the second segment of the shaft,
- clamping (315) the clamping region of the rear pole wheel on the third segment of the shaft,
- clamping (320) the clamping region of the front pole wheel on the first segment of the shaft and
- abutting (335) the rear pole wheel on the collar of the fourth segment.

FIG 1

FIG 2

FIG 3

FIG 4

130, 135

405

FIG 5

130, 135

410

FIG 6

30

Emmanchement de l'arbre sur les roues polaires | 305

Indexation des zones de centrage des roues polaires
sur le deuxième tronçon de l'arbre | 310

Serrage de la zone de serrage de la roue polaire arrière
sur le premier tronçon de l'arbre | 315

Serrage de la zone de serrage de la roue polaire avant sur
le troisième tronçon de l'arbre | 320

Mise en butée de la roue polaire arrière sur la collerette
du quatrième tronçon. | 325

FIG 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2745445 A
- FR 2905806
- WO 2006103361 A1
- DE 19543541 A1